# EUROPEAN PATENT SPECIFICATION

(11) **EP 1 462 171 B1**
(45) Date of publication and mention of the grant of the patent: **03.10.2007**
(21) Application number: 04251682.3
(22) Date of filing: 24.03.2004
(51) Int. Cl.: B01J 37/02, B01J 35/04, B01D 53/94, G01N 5/02

(54) **Water absorption measuring method of porous cell structure and method for carrying a catalyst on a porous support**
Verfahren zur Ermittlung der Wasseraufnahme einer porösen Wabenstruktur und Verfahren zum Auftragen eines Katalysators auf einem porösen Träger
Procédé pour mesurer la capacité d'absorption en eau d'une structure cellulaire et procédé de déposition d'un catalyseur sur un support poreux

(30) Priority: 28.03.2003 JP 2003090018
(43) Date of publication of application: 29.09.2004
(73) Proprietor: NGK INSULATORS, LTD., Nagoya-City, Aichi Pref. 467-8530 (JP)
(72) Inventor: Ichikawa, Yukihito, NGK Insulators, Ltd., Nagoya-shi Aichi-ken, 467-8530 (JP)
(74) Representative: Paget, Hugh Charles Edward

(56) References cited:
- EP-A- 0 506 301
- EP-A- 0 551 644
- WO-A-02/40157
- WO-A-02/40215
- WO-A-02/40216
- DE-A- 19 947 959
- US-A- 5 077 093
- US-A- 5 165 970
- US-B1- 6 316 383

## Description

### BACKGROUND OF THE INVENTION

### Field of the Invention

The present invention relates to a method of measuring a value relating to water absorption ability of a porous cell structure. Such a value is useful as a standard for setting/adjusting conditions for carrying a catalyst component in advance, when the porous cell structure is for use as a catalyst carrier to carry the catalyst component and forming a catalyst layer by a wash coating process. The present invention also relates to a method in which information on the measured value is displayed on the porous cell structure, and a method in which the displayed information is used to carry the catalyst component on the porous cell structure.

### Description of the Related Art

In general, a catalyst unit in which a ceramic honeycomb structure constituting one type of a porous cell structure is allowed to carry noble metals such as platinum (Pt), palladium (Pd) and rhodium (Rh) as catalyst components and to form a catalyst layer has been used in a catalyst unit for purifying an automobile exhaust gas.

It is important to set/adjust carrying conditions so that a carrying amount of catalyst component is appropriate in manufacturing the catalyst unit. When the carrying amount of catalyst component is excessively small, a sufficient exhaust gas purifying function or durability cannot be obtained. On the other hand, when an excessive amount of catalyst component is carried, the catalyst component of expensive and rare noble metals such as Pt, Pd, Rh is wasted, and a manufacturing cost increases.

To solve the problem, "water absorption" of a porous cell structure for use as the catalyst carrier is measured in advance to obtain a standard for setting/adjusting the carrying conditions of the catalyst component, and actual carrying conditions are set/adjusted based on the "water absorption".

The catalyst component is usually carried by the porous cell structure by a wash coating process. Concretely, when a catalyst slurry constituted of the catalyst component and water is used to charge the catalyst slurry into the porous cell structure, moisture of slurry is absorbed in pores in a partition wall, and the catalyst component as a solid content in the slurry is attached onto the partition wall surface and into the pores opened in the partition wall surface by a force of water absorption at this time.

It is to be noted that the porous cell structure having a porosity of about 20 to 35% has been used in the conventional catalyst carrier of the catalyst unit for purifying the automobile exhaust gas. However, for the porous cell structure, connecting portions among the pores in the partition wall are small, the catalyst component which is the solid content cannot enter the pores in the wash coating process, and the catalyst component cannot be carried in the pores in the partition wall.

Therefore, a value defined by a water amount accumulated on the surface of the partition wall constituting a cell and inside the pores opened in the partition wall surface has heretofore been used as the "water absorption" which is a standard for setting/adjusting the carrying conditions of the catalyst component (prior technical documents concerning the related art have not been especially found).

Additionally, in recent years, a method has been studied in which the porosity of the porous cell structure for use in the catalyst carrier is drastically enhanced to enhance the connections of the pores in the partition wall constituting the cell. The use of the surfaces of the pores in the partition wall, which have not heretofore carried the catalyst component, as base material portions for carrying the catalyst has also been studied.

Moreover, for a filter in which one end of a cell channel of the porous cell structure is alternately clogged, such as a diesel particulate filter (DPF), particulate matters (PM), hydrocarbons (HC), carbon monoxide (CO), nitrogen oxides (NOx) and the like which are noxious components in a diesel exhaust gas are treated with a catalyst by the filter. Therefore, attempts have been made to carry the catalyst component not only on the partition wall surface or in the pores made in the partition wall surface but also on the surfaces of the pores in the partition wall, so that treatment capability of the above-described noxious components is enhanced.

In this case, when the pores opened in the partition wall surface and the inside of the pores in the partition wall are completely filled with the catalyst component, the exhaust gas cannot enter the partition wall, and cannot contact the catalyst component inside. Therefore, the catalyst component needs to be appropriately attached to the pore surfaces without filling in the pores. This carrying state is obtained by the catalyst component constituting the solid content in the catalyst slurry, which is attached to the partition wall surface or the pore surfaces while the catalyst slurry is charged in the cell channels and the pores.

Therefore, to prepare the catalyst unit in which the surfaces of the pores inside the partition wall are also used as the base material portions of the catalyst carrier, instead of the "water absorption" defined by the partition wall surface and the water amount accumulated inside the pores opened in the partition wall surface, which has heretofore been the standard for setting/adjusting the carrying conditions of the catalyst component, a new conceptual "water absorption" needs to be defined as the standard also in consideration of water or the like attached to the surfaces of the pores inside the partition wall.

### SUMMARY OF THE INVENTION

The present invention has been developed in consideration of the conventional situation, and a main object thereof is to define and measure a value relating to "water absorption" of a porous cell structure, which is a standard for setting/adjusting carrying conditions so as to obtain an appropriate carrying amount of catalyst component, in preparing a catalyst unit also using the pore surfaces inside a partition wall of a porous cell structure as base material portions for carrying a catalyst.

According to the present invention, there is provided a method for measuring a value relating to water absorption ability of a porous cell structure as set out in claim 1. of a porous cell structure as a standard for setting conditions for carrying a catalyst component, and the method comprises the steps of: charging a liquid into a cell channel of the porous cell structure and a pore in a partition wall constituting a cell in advance; subsequently discharging the charged liquid to the outside of the porous cell structure; and regarding an amount of the liquid sticking/remaining onto the surface of the partition wall and the surface of the pore in the partition wall as the water absorption of the porous cell structure to measure the amount of the liquid (second water absorption measuring method).

Furthermore, within the present invention, there is provided the method further including the step of displaying information, as set out in claim 5.

Additionally, within the present invention, there is provided the method of loading catalyst on a porous cell structure, as set out in claim 8.

### BRIEF DESCRIPTION OF THE DRAWINGS

FIG. 1 is an enlarged sectional view showing a sticking state of a particulate material onto the surface of a partition wall and the surfaces of pores in the partition wall;
FIG. 2 is an enlarged sectional view showing that the pores inside the partition wall are filled with the particulate material;
FIG. 3 is a schematic diagram showing one example of an apparatus for use in carrying out a water absorption information display method of the present invention;
FIG. 4 is a schematic diagram showing one example of a measuring method of a water absorption;
FIG. 5 is a graph showing a correlation between an outlet side gas concentration and gas outflow time of DPF in an embodiment;
FIG. 6 is a graph showing a correlation between a gas sticking limit amount and gas outflow time of DPF in the embodiment; and
FIG. 7 is a graph showing a correlation between the gas sticking limit amount and catalyst carrying amount of DPF in the embodiment.

### DESCRIPTION OF THE PREFERRED EMBODIMENT

In the method of the present invention, a value relating to water absorption of a porous cell structure is measured as a standard for setting conditions for carrying a catalyst component in advance, when the porous cell structure is for use as a catalyst carrier to carry the catalyst component and forming a catalyst layer by a wash coating process. The method is characterized in that an amount of a material sticking to the surface of a partition wall constituting a cell of the porous cell structure and the surface of a pore inside the partition wall is regarded as the water absorption of the porous cell structure to measure the sticking amount.

As described above, to prepare a catalyst unit in which the pore surfaces inside the partition wall of the porous cell structure constituting the catalyst carrier are also used as a base material portion of the catalyst carrier, water or the like sticking to the surfaces of the pores inside the partition wall needs to be also considered to define and measure a "water absorption". Concretely, an amount of a material appropriately attached (adsorbed) onto the partition wall surface constituting the cell and the surfaces of the pores inside the partition wall is preferably handled as the "water absorption" of the porous cell structure constituting the carrier.

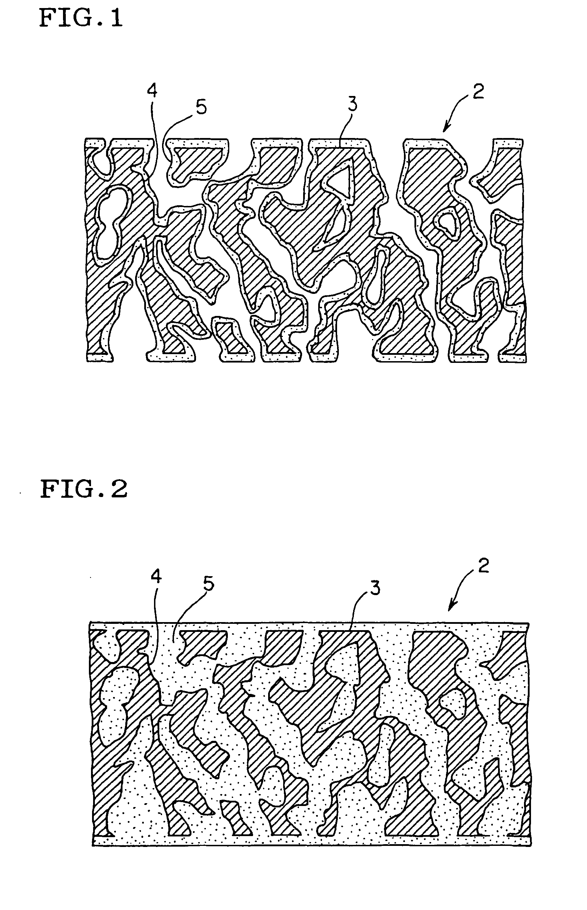

From this viewpoint, in the measuring method of the present invention, as shown in FIG. 1, the sticking amount of a material 5 onto a surface 3 of a partition wall 2 constituting the cell of the porous cell structure and onto the surface of a pore 4 inside the partition wall 2 is regarded as the water absorption of the porous cell structure to measure the sticking amount. It is to be noted that "the sticking of the material onto the pore surface" indicates that the inside of the pore 4 is not filled with the particulate material 5 as shown in FIG. 2, the material 5 sticks only to the surface of the pore 4 as shown in FIG. 1. For a reason for this state, the material simulates a catalyst component in a case where the catalyst is actually carried by the wash coating process. When the inside of the pore is filled with the catalyst component as described above, the exhaust gas cannot enter the partition wall, and cannot contact the catalyst component inside.

It is to be noted that a method defined in JASO M505-87 (a method of testing a ceramic monolith carrier for an automobile exhaust gas purifying catalyst) issued by Society of Automotive Engineers of Japan is known as a method of absorbing water into the honeycomb structure to obtain water absorption. However, in this method, the inside of the pore 4 is filled with water as shown in FIG. 2. When this water is replaced with the catalyst component and considered, the state corresponds to a state in which the inside of the pore is filled with the catalyst component. However, when the pore is filled with the catalyst component, the catalyst component inside the pore cannot sufficiently contact the noxious component in the exhaust gas as described above, and therefore a purifying efficiency drops.

Therefore, when the pore surfaces inside the partition wall are also used as the base material portions for carrying the catalyst, it is important to carry the catalyst component on the pore surfaces so that the inside of the pore is prevented from being filled. Accordingly, hollow portions are formed inside the pores, the catalyst component on the pore surface can contact the noxious component of the exhaust gas which has entered the hollow portion, and the purifying efficiency is enhanced.

In the present measuring method, the material for use in the measurement is a steam or hydrocarbon. The material is contained in air when fed into the porous cell structure, and the above-described appropriate sticking state is easily obtained with steam sticking to the partition wall surface constituting the cell of the porous cell structure and the pore surfaces inside the partition wall.

In accordance with the measuring method, to prepare the catalyst unit in which the pore surfaces inside the partition wall of the porous cell structure are to be used as the base material portions for carrying the catalyst, the value relating to the water absorption of the porous cell structure is obtained as an effective standard for setting/adjusting the carrying conditions so as to obtain the appropriate carrying amount of catalyst component.

In the information display method of the present invention, the value relating to water absorption ability of the porous cell structure is measured by the measuring method, and information on the water absorption and the dry mass of the porous cell structure whose water absorption has been measured or information only on the water absorption is displayed on the surface of the porous cell structure.

Moreover, in the catalyst loading method of the present invention, the information on the water absorption and dry mass or the information only on the water absorption displayed on the surface of the porous cell structure by the above-described water absorption information display method is read, and the carrying conditions of the catalyst component onto the porous cell structure by the wash coating process are adjusted based on the information.

As a method of allowing the porous cell structure to carry the catalyst component, in general, the porous cell structure is immersed in a catalyst slurry for the wash coating containing the catalyst component or one end of the porous cell structure is immersed in the slurry to suck the slurry from the other end or the slurry is introduced under a pressure into the porous cell structure from one end of the structure. However, in this method, the amount of the catalyst component carried by the porous cell structure has a correlation with the water absorption of the porous cell structure measured by the above-described measuring method. Concretely, the amount is substantially proportional to the water absorption.

That is, the water absorption of the porous cell structure indicates the amount of water attached and held onto the surface of the partition wall constituting the cell or the surfaces of the pores. The larger the value is, the larger the carrying amount of the catalyst component tends to be. Therefore, when the water absorption of the porous cell structure is used as the standard to set/adjust the catalyst carrying conditions (e.g., viscosity of the catalyst slurry, immersion time, pressure at the time of suction or pressurizing, etc.), it is possible to carry an appropriate amount of catalyst component.

In the water absorption information display method of the present invention, the water absorption of the porous cell structure useful as the standard in adjusting the catalyst carrying conditions in this manner is measured by the above-described measuring method, and the information on the water absorption is displayed on the surface of the porous cell structure. As in the catalyst carrying method of the present invention, the displayed information is read, and the conditions for carrying the catalyst onto the porous cell structure by the wash coating process are set/adjusted based on the information. Accordingly, each porous cell structure can carry the appropriate amount of catalyst component.

Moreover, as a result, the obtained catalyst unit or DPF fulfills desired catalyst effects, further the catalyst components which are expensive and rare noble metals such as Pt, Pd, Rh are prevented from being wasted, and it is possible to reduce a manufacturing cost. Since the catalyst carrying conditions can be adjusted based on the information of each porous cell structure, each porous cell structure can be adjusted sufficiently.

It is to be noted that the information only on the water absorption of the porous cell structure may also be displayed on the surface of the porous cell structure. However, when the information on the dry mass of the porous cell structure is also displayed, it is possible to more exactly set/adjust the catalyst carrying conditions based on the information. In general, since the water absorption of the porous cell structure is obtained by subtracting the dry mass from a water absorbed mass of the porous cell structure, the dry mass is usually measured beforehand during the measurement of the water absorption. Therefore, the dry mass may be displayed together with the information on the water absorption.

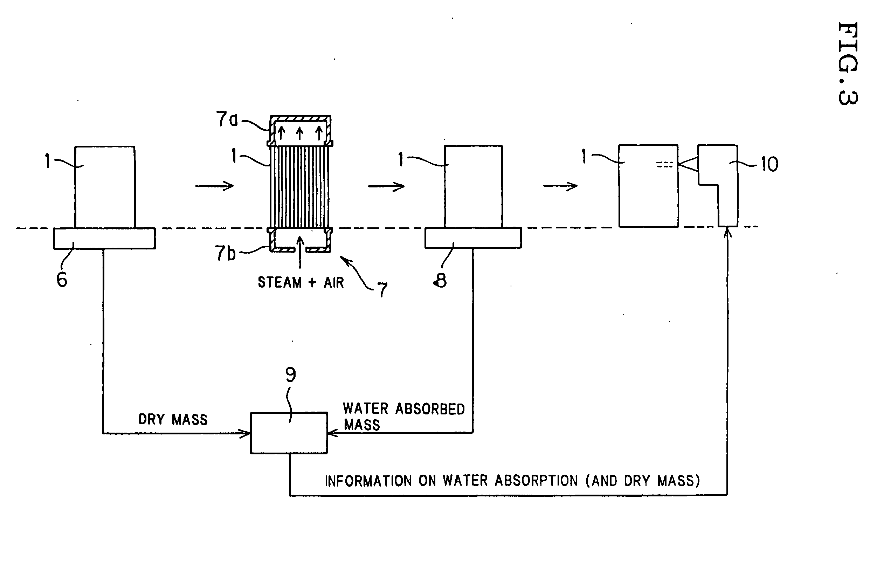

FIG. 3 is a schematic diagram showing one example of an apparatus for use in carrying out the water absorption information display method of the present invention. The water absorption of the porous cell structure is obtained by the above-described measuring method in the apparatus. The apparatus includes: a mass meter 6 for measuring the dry mass of a porous cell structure 1 ; a water absorbing unit 7 for pressurizing and feeding a steam-containing air into the porous cell structure 1; a mass meter 8 for measuring the water absorbed mass of the porous cell structure 1 ; calculation means 9 for calculating the water absorption from the dry mass and water absorbed mass of the porous cell structure 1 measured by the mass meters 6 and 8; and a marker 10 for displaying the information on the water absorption of the porous cell structure 1 calculated by the calculation means 9 (and the information on the dry mass) on the surface of the porous cell structure 1.

By the apparatus, after first measuring the dry mass of the porous cell structure 1 by the mass meter 6, opposite ends of the structure are held by flanges 7a, 7b, and the steam-containing air is pressurized and fed into the cell for a predetermined time in this state by the water absorbing unit 7. As shown in FIG. 1, a water absorbed state is obtained in which the steam sticks to the surface 3 of the partition wall 2 constituting the cell and the surfaces of the pores 4 inside the partition wall 2. Thereafter, the water absorbed mass is measured by the mass meter 8, and the water absorption is calculated from the water absorbed mass and the first measured dry mass by the calculation means 9. Moreover, finally the information on the water absorption (and the information on the dry mass) is displayed on the surface of the porous cell structure 1 by the marker 10.

In the display method, for example, characters or bar codes can be used in a display form of information. The information can be displayed by ink coating, laser, sand blast, chemical corrosion and the like. When the information is displayed in ink, an ink jet process or a thermal transfer process is preferably used.

A method of displaying the information by an ink jet printer or a laser marker is fast in printing speed and is of a non-contact type and is therefore preferable in treating a large amount of porous cell structure. Especially, the display method by the laser marker does not require any ink, pretreatment or the like is also unnecessary, and therefore the method is more preferable than the ink jet process from the viewpoint of maintenance. A YAG pulse laser apparatus or a CO₂ carbon dioxide gas laser apparatus can preferably be used as the laser marker.

[0039] For the reading of the information displayed on the surface of the porous cell structure, for example, when the display form of the information is the character, the character is photographed by a CCD camera, and preferably recognized by a pattern matching process. In this process, the character for use in displaying the information is registered beforehand, and a pattern closest to the registered character is selected from shading information of the photographed character.

Moreover, when the display form of the information is the bar code, a bar code reader is used to read the information. In a read principle of the bar code reader, a bar code label is irradiated with a laser light, and a diffused/reflected light is received by a light receiving section of the bar code reader. Since intensity of the diffused/reflected light is determined by a difference in reflectance between space and bar, the light is converted to an ON/OFF digital signal, and is accordingly read by distinguishing the space from the bar.

### [Examples]

The present invention will hereinafter be described based on examples further in detail, but the present invention is not limited to these examples.

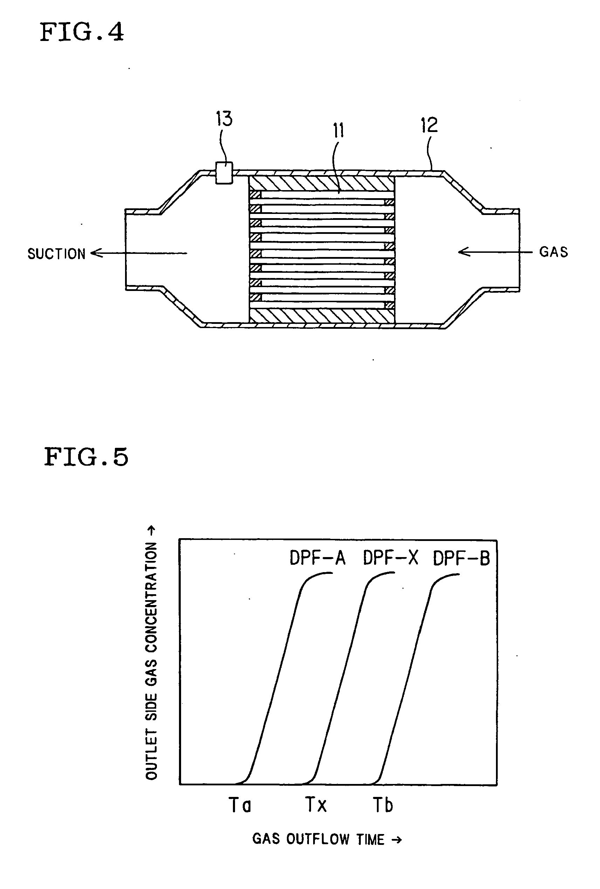

As shown in FIG. 4, the cell channels of the porous cell structure are alternately clogged in one end, a cordierite DPF 11 constituted in this manner is housed/fixed into a cylindrical can member 12. Air (gas) containing a hydrocarbon compound is sucked from an outlet side while fed from an inlet side, and passed through the DPF. Then, for a certain time, the hydrocarbon compound in the gas is adsorbed by the pore surfaces inside the partition wall of the DPF 11. Therefore, the hydrocarbon compound does not flow out of the outlet side of the DPF 11 immediately. However, with elapse of some time from the start of the introduction of the gas, the gas flows out of the outlet side of the DPF 11. This is supposedly because the amount of the hydrocarbon compound capable of sticking to the pore surfaces inside the partition wall is limited.

When a similar test was conducted with respect to several cordierite DPFs having equal porosity but having different pore distributions, it was seen that there was a difference in time (gas outflow time) required for the gas containing the hydrocarbon compound to flow from the outlet side of the DPF. When these DPFs were allowed to carry the catalyst component, it was clarified that the gas outflow time of each DPF had a correlation with the carrying amount of catalyst component (catalyst carrying amount). This is supposedly because with a larger surface area of the pore surface, the adsorbed amount of the hydrocarbon compound increases. Similarly, with the larger surface area of the pore surface, the amount of catalyst component carried on the pore surface also increases.

It is to be noted that for the time for the gas containing the hydrocarbon compound to flow out of the outlet side of the DPF, for example, as shown in FIG. 4, a laser generating unit 13 is disposed in the vicinity of an outlet of the DPF 11, and a laser light can be radiated from the laser generating unit 13 in a fan shape in parallel with the outlet side end surface of the DPF 11 to measure the time. That is, when the gas containing the hydrocarbon compound flows out of the outlet side of the DPF, laser hits the hydrocarbon compound to emit a bright luminescent spot, and therefore a time for generating a predetermined number of luminescent spots is measured. When the DPF is filled with the hydrocarbon compound on the outlet side, light transmittance changes with concentration, and therefore the concentration of the hydrocarbon compound on the outlet side of the DPF is measured by the transmittance, so that a time for obtaining a predetermined concentration may be measured.

Moreover, when the gas outflow time measured in this manner and the amount of the hydrocarbon compound contained in the gas fed into the DPF per unit time (gas generation amount) are integrated (gas outflow time x gas generation amount), the limit amount of the hydrocarbon compound sticking to the DPF (gas sticking limit amount), corresponding to the "water absorption" of the present invention, is obtained.

Based on the above-described findings, an appropriate catalyst carrying amount was presumed from the water absorption of the DPF as follows. First, DPF-A and DPF-B whose appropriate catalyst carrying amounts were known beforehand were prepared. Either DPF is made of a cordierite material. For dimensions, a diameter is φ230 mm, and a length is 300 mm. The thickness of the partition wall of the cell structure is 12 mil, and cell density is 300 cells/square inch (cpsi). Additionally, the DPF-A is different from the DPF-B in the catalyst carrying amount, and the DPF-B has a more catalyst carrying amount.

A sample was taken from DPF-A' having the same manufacturing lot as that of DPF-A and having the catalyst carrying amount substantially equal to that of the DPF-A, and porosity was measured with a mercury porosimeter. Similarly, a sample was taken from DPF-B' having the same manufacturing lot as that of DPF-B and having the catalyst carrying amount substantially equal to that of the DPF-B, and porosity was measured with the mercury porosimeter. As a result, the DPF-A' and DPF-B' have an equal porosity of about 65%. Therefore, the DPF-A and DPF-B in the same manufacturing lot as that of the above DPFs can be regarded to have different catalyst carrying amounts, but to have the equal porosity. It is to be noted that the DPF-A had a product mass substantially equal to that of the DPF-B.

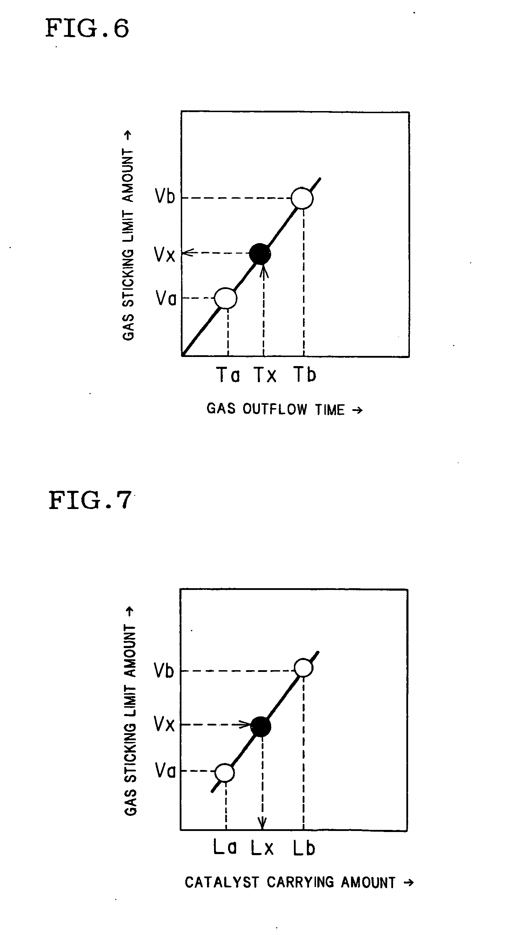

The gas containing the hydrocarbon compound was fed into the DPF-A and DPF-B in the same manner as in the above-described test, a gas outflow time Tₐ of the DPF-A and a gas outflow time T_{b} of the DPF-B were measured under the same conditions, and results shown in the graph of FIG. 5 were obtained. As described above, since the gas sticking limit amount of the DPF is represented by "gas sticking limit amount = gas outflow time x gas generation amount", a correlation diagram between the gas outflow time and the gas sticking limit amount is drawn as shown in FIG. 6. Furthermore, as shown in FIG. 7, a correlation diagram between the catalyst carrying amount and the gas sticking limit amount is drawn.

This gas sticking limit amount, that is, the "sticking amount of the material" indicates a value corresponding to the "water absorption" of the present invention, and the appropriate catalyst carrying amount can be estimated based on this. For example, assuming that there is DPF-X whose catalyst carrying amount is unknown, a gas outflow time Tₓ is measured in the above-described method. Then, a gas sticking limit amount Vₓ is obtained from the correlation diagrams of FIGS. 6 and 7, and a catalyst carrying amount Lₓ can be estimated. The following table shows each ratio of the water absorption to the catalyst carrying amount obtained in this manner. For comparison, the water absorption obtained in a state in which the inside of the pore 4 is filled with the particulate material (hydrocarbon compound) 5 as shown in FIG. 2 is also shown.

**[Table 1]**

| | Porosity ratio | Water absorption ratio obtained by comparative method | Water absorption ratio obtained by method of the present invention | Catalyst carrying amount ratio |
|---|---|---|---|---|
| DPF-A | 1.00 | 1.00 | 1.00 | 1.00 |
| DPF-X | 1.00 | 0.97 | 1.18 | 1.13 |
| DPF-B | 1.00 | 1.02 | 1.41 | 1.35 |

As described above, in accordance with the present invention, to prepare a catalyst unit in which pore surfaces inside a partition wall of a porous cell structure are also used as base material portions for carrying a catalyst, a value relating to water absorption of the porous cell structure is obtained as an effective standard for setting/adjusting carrying conditions so that a carrying amount of a catalyst component is appropriate. When information on the water absorption is displayed on the surface of the porous cell structure, the porous cell structure can be allowed to carry an appropriate amount of catalyst component based on the information.

## Claims

1. A method of measuring a value relating to water absorption ability of a porous cell structure (11) having porous partition walls (2) separating gas-flow cells, for use in setting conditions for the carrying of a catalyst component on the structure,
the method comprising the steps of:
(i) feeding a material in air into the porous cell structure so that the material adheres to the surface (3) of the porous partition walls (2) and to the surface of pores (4) of the porous partition walls, said material being steam or hydrocarbon,
(ii) determining the amount of said material absorbed in step (i), and taking said amount as said value relating to said water absorption ability of the porous cell structure.

2. A method according to claim 1, wherein said material is steam, which is fed in step (i) into the porous cell structure in air for a predetermined time period, before step (ii).

3. A method according to claim 2 including before step (i) measuring the dry mass of the porous cell structure and, in step (ii) measuring the mass of the cell structure following step (i) and determining said amount of said material absorbed from the mass of the cell structure following step (i) and said measured dry mass.

4. A method according to claim 1, wherein said material is hydrocarbon, which is passed into the porous cell structure in air at one end and the time of outflow of the hydrocarbon at the other end thereof is measured, and in step (ii) the amount absorbed is calculated from this time and the amount of hydrocarbon fed into the structure per unit time.

5. A method according to claim 1, further including the step of
displaying, as information relating to the water absorption ability of the porous cell structure, information on a value obtained in step (ii) by marking the information on the surface of the porous cell structure (10), and optionally also displaying on the surface of the porous cell structure (10) the dry mass of the porous cell structure.

6. A method according to claim 5, wherein the display form of the information is one of characters and a bar code.

7. A method according to claim 5 or 6, further comprising one of:
displaying the information in ink;
displaying the information in ink is an ink jet process or a thermal transfer process;
displaying the information by laser;
displaying the information by sand blast;
displaying the information by chemical corrosion.

8. A method of loading a catalyst on a porous cell structure comprising the steps of: reading information on value relating to water absorption ability, and optionally information on dry mass, displayed on the surface of the porous cell structure, said value having been measured by a method according to any one of claims 5 to 7; and adjusting loading conditions of the catalyst onto the porous cell structure by a wash coating process on the basis of the read information.

## Patentansprüche

1. Verfahren zur Ermittlung eines Werts bezüglich der Wasserabsorptionsfähigkeit einer porösen Zellstruktur (11), welche über Gasstromzellen unterteilende poröse Trennwände (2) verfügt, zur Verwendung beim Einstellen von Bedingungen zum Tragen einer Katalysatorkomponente auf der Struktur,
wobei das Verfahren die folgenden Schritte umfasst:
(i) Zuführen eines Materials in Luft in die poröse Zellstruktur, so dass das Material an der Oberfläche (3) der porösen Trennwände (2) und an der Oberfläche von Poren (4) der Trennwände anhaftet, wobei das Material Wasserdampf oder Kohlenwasserstoff ist,
(ii) Bestimmen der Menge des in Schritt (i) absorbierten Materials und Annehmen der Menge als den in Bezug zur Wasserabsorptionsfähigkeit der porösen Zellstruktur stehenden Wert.

2. Verfahren nach Anspruch 1, worin das Material Dampf ist, welches in Schritt (i) vor Schritt (ii) in die poröse Zellstruktur in Luft für eine vorbestimmte Zeitspanne zugeführt wird.

3. Verfahren nach Anspruch 2, umfassend das Messen der Trockenmasse der porösen Zellstruktur vor Schritt (i) und das auf Schritt (i) in Schritt (ii) folgende Messen der Masse der Zellstruktur sowie das Bestimmen der Menge des von der Masse der Zellstruktur absorbierten Materials und der gemessenen Trockenmasse im Anschluss an Schritt (i).

4. Verfahren nach Anspruch 1, worin das Material Kohlenwasserstoff ist, der in Luft an einem Ende in die poröse Zellstruktur eintreten gelassen wird, und dessen Zeitspanne des Ausströmens des Kohlenwasserstoffs am anderen Ende derselben gemessen wird und in Schritt (ii) die absorbierte Menge von diesem Zeitpunkt an und die Menge des in die Struktur pro Zeiteinheit zugeführten Kohlenwasserstoffs berechnet wird.

5. Verfahren nach Anspruch 1, ferner umfassend den Schritt des
Anzeigens der Informationen über einen in Schritt (ii) erhaltenen Wert als Informationen bezüglich der Wasserabsorptionsfähigkeit der porösen Zellstruktur durch Markieren der Informationen auf der Oberfläche der porösen Zellstruktur (10) und wahlweise auch des Anzeigens der Trockenmasse der porösen Zellstruktur auf der Oberfläche der porösen Zellstruktur (10).

6. Verfahren nach Anspruch 5, worin die Anzeigeform der Informationen in Form von Zeichen und einem Barcode erfolgt.

7. Verfahren nach einem der Ansprüche 5 oder 6, ferner umfassend eines der folgenden:
Anzeigen der Informationen mit Tinte,
Anzeigen der Informationen mit Tinte ist ein Tintenstrahlvorgang oder ein Wärmetransfervorgang,
Anzeigen der Informationen durch Laser,
Anzeigen der Informationen durch Sandstrahlen,
Anzeigen der Informationen durch chemisches Zersetzen.

8. Verfahren zum Beladen eines Katalysators auf eine poröse Zellstruktur, umfassend die folgenden Schritte: Ablesen der Informationen über den Wert bezüglich der Wasserabsorptionsfähigkeit und wahlweise der Informationen über die Trockenmasse, die auf der Oberfläche der porösen Zellstruktur angezeigt werden, wobei der Wert durch ein Verfahren nach einem der Ansprüche 5 bis 7 gemessen wurde, und Anpassen der Beladebedingungen des Katalysator auf die poröse Zell-struktur durch einen auf den abgelesenen Informationen basierenden Waschbeschichtungsvorgang.

## Revendications

1. Procédé de mesure d'une valeur relative à la capacité d'absorption d'eau d'une structure cellulaire poreuse (11) comportant des cloisons de séparation poreuses (2) séparant les cellules à courant gazeux, pour une utilisation dans la définition des conditions pour le support d'un composant de catalyseur sur la structure,
le procédé comprenant les étapes consistant à :
(i) délivrer un matériau dans l'air dans la structure cellulaire poreuse de sorte que le matériau adhère à la surface (3) des cloisons de séparation poreuses (2) et à la surface des pores (4) des cloisons de séparation poreuses, ledit matériau étant de la vapeur ou un hydrocarbure,
(ii) déterminer la quantité dudit matériau absorbé à l'étape (i), et prendre ladite quantité comme ladite valeur relative à ladite capacité d'absorption d'eau de la structure cellulaire poreuse.

2. Procédé selon la revendication 1, dans lequel ledit matériau est de la vapeur, qui est délivrée à l'étape (i) dans la structure cellulaire poreuse dans l'air pendant une période prédéterminée, avant l'étape (ii).

3. Procédé selon la revendication 2, comprenant avant l'étape (i) la mesure de la masse sèche de la structure cellulaire poreuse et, à l'étape (ii), la mesure de la masse de la structure cellulaire après l'étape (i) et la détermination de ladite quantité dudit matériau absorbé de la masse de la structure cellulaire après l'étape (i) et ladite masse sèche mesurée.

4. Procédé selon la revendication 1, dans lequel ledit matériau est un hydrocarbure, que l'on fait passer dans la structure cellulaire poreuse dans l'air au niveau d'une extrémité et le temps d'écoulement de l'hydrocarbure au niveau de son autre extrémité est mesuré, et à l'étape (ii) la quantité absorbée est calculée à partir de ce temps et de la quantité d'hydrocarbure délivrée dans la structure par unité de temps.

5. Procédé selon la revendication 1, comprenant en outre les étapes consistant à
afficher, en tant qu'informations relatives à la capacité d'absorption d'eau de la structure cellulaire poreuse, des informations sur une valeur obtenue à l'étape (ii) en marquant les informations sur la surface de la structure cellulaire poreuse (10), et facultativement afficher également sur la surface de la structure cellulaire poreuse (10) la masse sèche de la structure cellulaire poreuse.

6. Procédé selon la revendication 5, dans lequel la forme d'affichage des informations est l'une parmi des caractères et un code à barres.

7. Procédé selon la revendication 5 ou 6, comprenant en outre l'une des étapes consistant à :
afficher les informations à l'encre ;
l'affichage des informations à l'encre est un procédé à jet d'encre ou un procédé à transfert thermique ;
afficher les informations au laser ;
afficher les informations au jet de sable ;
afficher les informations par corrosion chimique.

8. Procédé de chargement d'un catalyseur sur une structure cellulaire poreuse comprenant les étapes consistant à : lire les informations sur une valeur relative à la capacité d'absorption d'eau, et facultativement les informations sur la masse sèche, affichées sur la surface de la structure cellulaire poreuse, ladite valeur ayant été mesurée par un procédé selon l'une quelconque des revendications 5 à 7 ; et ajuster les conditions de chargement du catalyseur sur la structure cellulaire poreuse par un procédé de revêtement par lavage sur la base des informations lues.
